# EUROPEAN PATENT APPLICATION

(11) **EP 4 529 085 A1**
(43) Date of publication of application: **26.03.2025**
(21) Application number: 22942539.2
(22) Date of filing: 28.12.2022
(51) Int. Cl.: H04L 9/40, G06F 16/27

(54) **DATA ACCESS METHOD AND APPARATUS, ELECTRONIC DEVICE AND STORAGE MEDIUM**

(30) Priority: 20.05.2022 CN 202210555604
(71) Applicant: ZTE CORPORATION, Shenzhen, Guangdong 518057 (CN)
(72) Inventor: LI, Bin, Shenzhen, Guangdong 518057 (CN)
(74) Representative: Chimini, Francesco
(86) International application number: PCT/CN2022/142663
(87) International publication number: WO 2023/221520

(57) **Abstract**

The present disclosure relates to a data access method and apparatus, an electronic device, and a storage medium. The method includes: sending a data connection request to a data source system, where the data connection request carries connection configuration information, and the connection configuration information is used to represent configuration information required for completing data connection with the data source system; loading data to be accessed, as determined by the data source system in response to the data connection request; parsing the successfully-loaded data to be accessed, and detecting the parsed data to be accessed based on the connection configuration information; and accessing the successfully-detected data to be accessed to a target database.

## Description

### Cross-Reference to Related Application

The present disclosure claims priority to Chinese Patent Application No. CN202210555604.7, entitled "DATA ACCESS METHOD AND APPARATUS, ELECTRONIC DEVICE, AND STORAGE MEDIUM", and filed on May 20, 2022, which is incorporated herein by reference in its entirety.

### Technical Field

The present disclosure relates to the field of data processing, and in particular, to a data access method and apparatus, an electronic device, and a storage medium.

### Background

A data middle platform plays a profound role in the digital transformation of governments and enterprises by precipitating business and data from various business units, and constructing a data construction, management, and use system including data technology, data governance, and data operations to achieve data empowerment. To ensure the reliability of data assets and data services within the data middle platform, data accessed from a data source to the data middle platform should meet the following requirements: 1) data completeness: all relevant data should be collected without omission; 2) data timeliness: the delay in data arrival at the data middle platform should not impact the time sensitivity requirements of business applications that rely on the data; and 3) data accuracy: data should not be modified in the collection process.

### Summary

The present disclosure provides a data access method and apparatus, an electronic device, and a storage medium.

In a first aspect, the present disclosure provides a data access method. The method includes: sending a data connection request to a data source system, where the data connection request carries connection configuration information, and the connection configuration information is used to represent configuration information required for completing data connection with the data source system; loading data to be accessed, as determined by the data source system in response to the data connection request; parsing the successfully-loaded data to be accessed, and detecting the parsed data to be accessed based on the connection configuration information; and accessing the successfully-detected data to be accessed to a target database.

In a second aspect, the present disclosure further provides a data access apparatus. The apparatus includes: a first sending module, configured to send a data connection request to a data source system, where the data connection request carries connection configuration information, and the connection configuration information is used to represent configuration information required for completing data connection with the data source system; a loading module, configured to load data to be accessed, as determined by the data source system in response to the data connection request; a parsing module, configured to parse the successfully-loaded data to be accessed, and detect the parsed data to be accessed based on the connection configuration information; and an access module, configured to access the successfully-detected data to be accessed to a target database.

In a third aspect, the present disclosure further provides an electronic device, including a processor, a communication interface, a memory, and a communication bus, where the processor, the communication interface, and the memory are in mutual communication through the communication bus; the memory is configured to store a computer program; and the processor is configured to implement the data access method in the first aspect when executing the program stored on the memory.

In a fourth aspect, the present disclosure further provides a computer-readable storage medium, having a computer program stored therein. The computer program, when executed by the processor, implements the data access method in the first aspect.

### Brief Description of the Drawings

The accompanying drawings herein are incorporated into the specification to form a part of the specification, illustrate embodiments conforming to the present disclosure, and are used to explain the principle of the present disclosure together with the specification.

In order to describe the technical solutions in the embodiments of the present disclosure or in the related art more clearly, the accompanying drawings required to be used in descriptions of the embodiments or the related art will be briefly introduced below, and it is apparent that those of ordinary skill in the art may also obtain other accompanying drawings according to these accompanying drawings without creative work.
Fig. 1 is a schematic flowchart of a data access method provided by an embodiment of the present disclosure;
Fig. 2 is a schematic diagram of a data access scenario provided by an embodiment of the present disclosure;
Fig. 3 is a flowchart of a process of interaction between a digital information system and a data source system for completing data connection provided by an embodiment of the present disclosure;
Fig. 4 is a schematic diagram of a structure of a data access apparatus provided by an embodiment of the present disclosure; and
Fig. 5 is a schematic diagram of a structure of an electronic device provided by an embodiment of the present disclosure.

### Detailed Description of the Embodiments

In order to have a clearer understanding of the objectives, technical solutions, and advantages of embodiments of the present disclosure, the technical solutions in the embodiments of the present disclosure are clearly and completely described in conjunction with the accompanying drawings in the embodiments of the present disclosure, and it is apparent that the described embodiments are only a part rather all of the embodiments of the present disclosure. Based on the embodiments of the present disclosure, all other embodiments obtained by those of ordinary skill in the art without creative work shall fall within the scope of protection of the present disclosure.

Currently, when implementing a data middle platform, data quality control (e.g., completeness, timeliness, and accuracy of the data) is typically achieved in a phase after data access, which may ensure data quality within the data middle platform under a stable network state and with a single data access method. However, in scenarios with complex network conditions and a plurality of independently evolving data source systems, the data quality of the data middle platform cannot be effectively guaranteed, leading to high operation and maintenance costs.

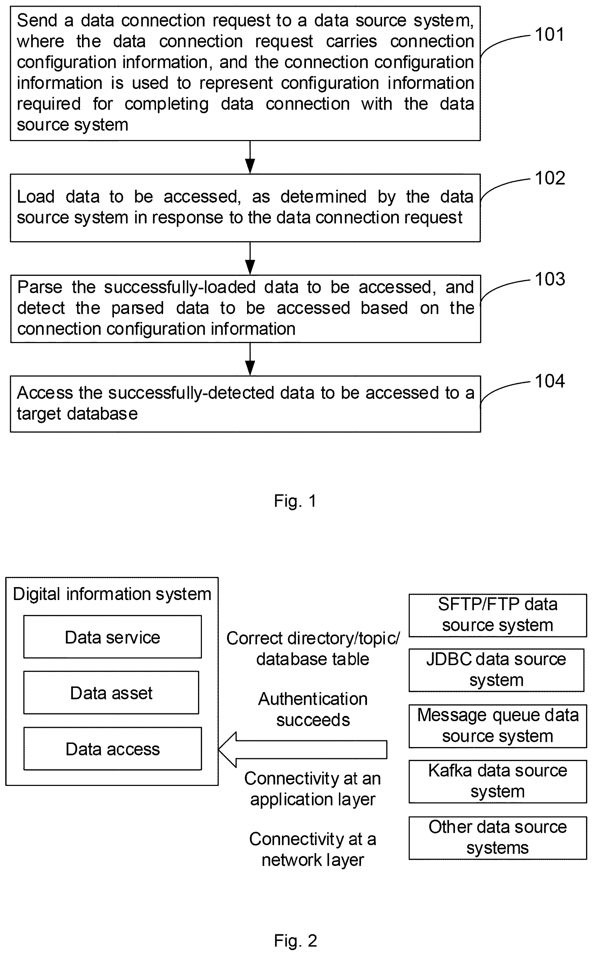

Referring to Fig. 1, Fig. 1 is a schematic flowchart of a data access method provided by an embodiment of the present disclosure. As shown in Fig. 1, the data access method may include step 101 to step 104 as below.

Step 101: Send a data connection request to a data source system, where the data connection request carries connection configuration information, and the connection configuration information is used to represent configuration information required for completing data connection with the data source system.

The above connection configuration information is information that is manually pre-configured. The connection configuration information may include, but is not limited to, an Internet protocol, IP address corresponding to the data source system, a connection protocol type, a port number of a connection protocol, authentication information, identification information of data to be accessed, etc. The connection protocol type may include a file transfer protocol, FTP, a secret file transfer protocol, SFTP, Java database connectivity, JDBC, a message queue, Kafka (an open-source stream processing platform developed by the Apache software foundation), etc. The identification information of the data to be accessed may be directory information, database table information, or topic information. The type of the data to be accessed varies, and so does corresponding identification information. For example, when a data source of the data source system is a data source of the FTP or SFTP type, the identification information of the data to be accessed may be the directory information; when the data source of the data source system is a data source of the Kafka or message queue type, the identification information of the data to be accessed may be the topic information; and when the data source of the data source system is a data source of the JDBC type, the identification information of the data to be accessed may be the database table information. The data connection request is used to request for data connection with the data source system, and the data connection request carries the connection configuration information. The data source system participating in data connection may be rapidly located based on the connection configuration information, and a link for data connection is established with the data source system.

It should be noted that the data access method may be applied to a digital information system (also known as a data middle platform), and the digital information system may be in data connection with a plurality of data source systems, as shown in Fig. 2. The digital information system may be in data connection with the data source system based on an application layer protocol (i.e., the connection protocol) above a network layer, thereby forming data assets and providing data services. The data access process needs to depend on the following conditions: (1) network layer routing accessibility from the digital information system to the data source system; (2) connectivity at an application layer (corresponding to an application layer protocol port); (3) successful authentication of the data source system; and (4) correctness of information such as a directory (SFTP/FTP), topic information (Kafka), and a database table (JDBC) configured for data access.

Step 102: Load the data to be accessed, as determined by the data source system in response to the data connection request.

In this step, after receiving the data connection request, the data source system determines the data to be accessed in response to the data connection request, and pushes the data to be accessed to the digital information system, and therefore the digital information system may load the pushed data to be accessed. In the loading process, the data to be accessed may be detected based on the preset connection configuration information, such as detecting whether the data to be accessed is accessible, whether authentication is successful, and whether a directory/database table name/topic is correct. If all detections pass, it indicates that the data to be accessed can be successfully loaded, and step 103 is continuously performed; and if any detection fails, it indicates that the data to be accessed cannot be successfully loaded and needs to be stored in an abnormal data directory, and detailed abnormality information is recorded and stored, thereby facilitating subsequent abnormality localization and cause analysis.

Step 103: Parse the successfully-loaded data to be accessed, and detect the parsed data to be accessed based on the connection configuration information.

Based on the connection configuration information, the data content of the data to be accessed may also be specified, for example, a field content, a field order, etc. of the data may be specified, thereby ensuring stability of an accessed data format (e.g., a data source version). Even in the case of upgrade or change of the data source system, the data format of the data to be accessed in the digital information system cannot be modified.

In this step, the digital information system may parse the successfully-loaded data to be accessed, thereby obtaining the various field contents and the field order of the data to be accessed. Then, the various field contents and the field order of the data to be accessed may be detected based on the connection configuration information, such as detecting whether a file content organization of a data file and the number and the sequence of fields comply with regulations, whether the number and the sequence of table fields in the database table conform to standards, and whether a message content (fields and order) in the message queue is compliant. Therefore, the stability of the data format of the accessed data may be ensured.

Step 104: Access the successfully-detected data to be accessed to a target database.

The target database refers to a database or a data warehouse in the digital information system for storing normally accessed data. In this step, the digital information system may access the successfully-detected data to be accessed to the target database, and form the data assets and provide the data services based on the accessed data in the target database. During access to the target database, an entry timestamp may also be recorded, and an entry delay of the data to be accessed is completely calculated based on the entry timestamp.

In this embodiment, in the process of accessing the data to be accessed to the target database, the data to be accessed may be detected based on the connection configuration information, thereby accessing the successfully-detected data to be accessed, effectively ensuring the quality of the accessed data, and reducing the operation and maintenance costs.

Further, the connection configuration information includes the IP address corresponding to the data source system, the connection protocol type, the port number of the connection protocol, the authentication information, and the identification information of the data to be accessed. The identification information of the data to be accessed includes the directory information, the database table information, or the topic information.

The above step of loading the data to be accessed, as determined by the data source system in response to the data connection request includes: establishing a link for data interaction with the data source system based on the IP address corresponding to the data source system, the connection protocol type, and the port number of the connection protocol; performing identity authentication on the data source system using the link and the authentication information; and in the case of successful identity authentication of the data source system, determining the data to be accessed from the data source system based on the identification information of the data to be accessed, and loading the data to be accessed.

In some embodiments, the connection configuration information may include the IP address corresponding to the data source system, the connection protocol type, the port number of the connection protocol, the authentication information, and the identification information of the data to be accessed. The connection protocol type may include a file transfer protocol, FTP, a secret file transfer protocol, SFTP, Java database connectivity, JDBC, a message queue, Kafka (an open-source stream processing platform developed by the Apache software foundation), etc. The identification information of the data to be accessed may be directory information, database table information, or topic information. The type of the data to be accessed varies, and so does corresponding identification information. For example, when a data source of the data source system is a data source of the FTP or SFTP type, the identification information of the data to be accessed may be the directory information; when the data source of the data source system is a data source of the Kafka or message queue type, the identification information of the data to be accessed may be the topic information; and when the data source of the data source system is a data source of the JDBC type, the identification information of the data to be accessed may be the database table information.

The process of loading the data to be accessed through the digital information system may include phases such as link establishment, authentication, downloading/receiving of the data to be accessed, etc. During the link establishment phase, the digital information system and the data source system need to establish a link for data interaction based on the IP address corresponding to the data source system, the connection protocol type, and the port number of the connection protocol. During the authentication phase, the digital information system and the data source system need to perform identity authentication on the data source system based on the established link and the authentication information. During the downloading/receiving phase of the data to be accessed, the data to be accessed may be determined from the data source system based on the identification information of the data to be accessed, the data to be accessed is downloaded/received, and the downloaded/received data to be accessed is loaded.

In this embodiment, the phases such as link establishment, authentication, and downloading/receiving of the data to be accessed all need to be finished based on the connection configuration information in the digital information system, thereby detecting the data to be accessed in the data loading process, so as to improve the quality of the accessed data.

Further, the method also includes: in the case of successful loading of the data to be accessed, recording and storing detailed access information of the data to be accessed, where the detailed access information includes at least one of a file name list, a file size, and file creation time; in the case of failed loading of the data to be accessed, accessing the data to be accessed to the abnormal data directory, and recording and storing detailed abnormality information of the data to be accessed, where the detailed abnormality information includes at least one of loading time, the IP address corresponding to the data source system, the connection protocol type, the port number of the connection protocol, the authentication information, and the identification information of the data to be accessed.

In some embodiments, in the case of successful loading of the data to be accessed, the detailed access information of the successfully-loaded data to be accessed may be recorded and stored. The detailed access information herein may vary according to different data types of the data to be accessed. For example, when the data type of the data to be accessed is the data file, the message queue, or the Kafka, data access details may include one or more of the file name list, the file size, and the file creation time; and when the data type of the data to be accessed is the database table, the data access details may include acquiring time, etc. of the record. By recording and storing the data access details, a detail snapshot of a data access condition may be performed, and when a source-adherent layer data file is deleted by a lifecycle management logic in the digital information system, related issues may be traced back based on a historical detail snapshot.

In the case of failed loading of the data to be accessed, the data to be accessed that fails in loading may be accessed to the abnormal data directory, and the detailed abnormality information of the data to be accessed that fails in loading is recorded and stored. The detailed abnormality information herein may include the loading time and relevant information of the data to be accessed, such as one or more of the IP address corresponding to the data source system, the connection protocol type, the port number of the connection protocol, the authentication information, and the identification information of the data to be accessed. By recording and storing the data failing in loading and the detailed abnormality information, the cause of the abnormality may be quickly located, thereby reducing the operation and maintenance costs.

Further, the method also includes: in the process of loading the data to be accessed, periodically sending a handshake request to the data source system at a preset interval, where the handshake request carries the connection configuration information; determining a link state with the data source system and an access condition of the data to be accessed according to a response made by the data source system based on the handshake request, where the response includes whether a response message from the data source system is received, and whether the response message represents successful detection of the connection configuration information in the case of receiving the response message from the data source system; and recording and storing the link state and the access condition.

In some embodiments, the digital information system may also periodically send the handshake request to the data source system at the preset interval in the process of accessing the data to be accessed, and therefore the link state between the digital information system and the data source system and the access condition of the data to be accessed within each period may be determined according to the response made by the data source system based on the handshake request, and the link state and the access condition are recorded and stored, thereby completely recording the link state and the access condition in the entire time dimension. The link state herein includes link disconnection/link connection, port unreachability/port reachability, authentication success/denial, etc. The access condition includes file directory non-existence/file directory existence, database table non-existence/database table existence, topic consistency/topic inconsistency, etc.

It should be noted that for each data source system, the digital information system may independently initiate the periodic handshake request to the data source system. The period corresponding to each data source system may be set independently, and the handshake period may be set according to the link state of each data source system. For example, the period may be set longer for the data source system with the stable link, so as to reduce network resource consumption, and the period may be set shorter for the data source system with the instable link, so as to increase the granularity of link state monitoring.

Further, the method also includes: in the case of determining abnormalities in the link state, recording and storing a detection log, where the detection log is used to record the cause of the link abnormalities; and outputting alarm information, where an output method of the alarm information includes at least one of displaying on a user interactive interface, pushing messages to a mobile terminal of a user, and sending emails to the user.

In some embodiments, when determining the abnormalities in the link state, the digital information system may record and store the detection log. The detection log is used to record the cause of the link abnormalities, such as application layer protocol unreachability, authentication information errors, and connected directory or database table information errors. Moreover, the digital information system may also output the alarm information, and the output method of the alarm information may be a method for displaying on the user interactive interface, a method for pushing the messages to the mobile terminal of the user, and a method for sending the emails to the user. Therefore, when there are abnormalities in data access, the abnormalities can be rapidly found and located.

Further, the connection configuration information further includes data feature information, and the data feature information is used to specify a field content and a field order of the data to be accessed.

The step of parsing the successfully-loaded data to be accessed, and detecting the parsed data to be accessed based on the connection configuration information includes: parsing the successfully-loaded data to be accessed to obtain the field content and the field order of the data to be accessed; detecting whether the field content and the field order meet requirements of the data feature information; in the case of detecting that the field content and the field order meet the requirements of the data feature information, performing the step of accessing the successfully-detected data to be accessed to the target database; and in the case of detecting that the field content and the field order do not meet the requirements of the data feature information, accessing the data to be accessed to the abnormal data directory, and recording and storing the cause of the abnormalities of the data to be accessed, where the cause of the abnormalities of the data to be accessed includes abnormalities in the field content or the field order of the data to be accessed.

Based on the connection configuration information, the data content of the data to be accessed may also be specified, for example, field content, a field order, etc. of the data may be specified, thereby ensuring stability of an accessed data format (e.g., a data source version). Even in the case of upgrade or change of the data source system, the data format of the data to be accessed in the digital information system cannot be modified.

In this step, the digital information system may parse the successfully-loaded data to be accessed, thereby obtaining the various field contents and the field order of the data to be accessed. Then, the various field contents and the field order of the data to be accessed may be detected based on the connection configuration information, such as detecting whether a file content organization of a data file and the number and the sequence of fields comply with regulations, whether the number and the sequence of table fields in the database table conform to standards, and whether a message content (fields and order) in the message queue is compliant. Therefore, the stability of the data format of the accessed data may be ensured.

Further, there are a plurality of types of data source systems, and different types of data source systems correspond to different connection protocol types.

In some embodiments, there may be a plurality of data source systems, such as the FTP/SFTP data source, the JDBC data source, the message queue data source, and the Kafka data source. The different types of data source systems correspond to the different connection protocol types. For example, the connection protocol type adopted by the FTP data source is FTP, the connection protocol type adopted by the SFTP data source is SFTP, and the connection protocol type adopted by the JDBC data source is JDBC. The digital information system in this embodiment may be compatible with the plurality of connection protocol types, so as to improve the stability of the link.

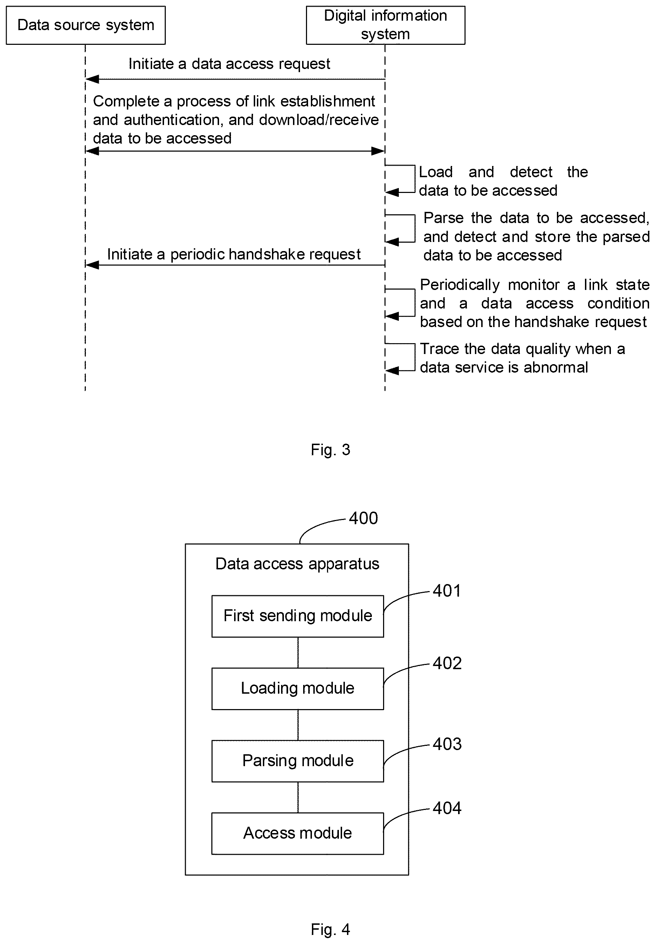

In some embodiments, a process of interaction between the digital information system and the data source system for completing data connection is shown in Fig. 3, and the data connection process includes step 301 to step 307 as below.

Step 301: The digital information system initiates a data access request to the data source system based on connection configuration information.

The digital information system needs to pre-configure the connection configuration information, where the connection configuration information includes an IP address corresponding to the data source system, a connection protocol type, a port number of a connection protocol, authentication information, directory information, database table information, topic information, data feature information, etc.

Step 302: The data source system completes a process of link establishment and authentication with the digital information system based on the data access request, and downloads/receives data to be accessed.

Step 303: The digital information system loads and detects the data to be accessed.

Detailed information such as detailed abnormality information and detailed access information is written into a specified database, and alarm information is reported in the case of continuous handshake failures or failed verification of the connection configuration information.

Step 304: The digital information system parses the data to be accessed, and detects and stores the parsed data to be accessed.

The successfully-loaded data to be accessed is parsed to obtain a field content and a field order of the data to be accessed. Whether the field content and the field order meet requirements of data feature information is detected. In the case of detecting that the field content and the field order meet the requirements of the data feature information, the successfully-detected data to be accessed is accessed to a target database. In the case of detecting that the field content and the field order do not meet the requirements of the data feature information, the data to be accessed is accessed to an abnormal data directory, and the cause of abnormalities of the data to be accessed is recorded and stored, where the cause of the abnormalities of the data to be accessed includes abnormalities in the field content or the field order of the data to be accessed.

Step 305: The digital information system initiates a periodic handshake request to the data source system based on the connection configuration information.

Step 306: The data source system periodically monitors a link state and a data access condition based on the handshake request.

When it is determined that the data to be accessed is unavailable, a detection log is stored, and the alarm information is initiated. Handshake and verification contents include, but are not limited to, the following scenarios: application layer protocol unreachability, authentication information errors, connected directory or database table information errors, etc. An alarm method may be displaying on a user interactive interface, pushing messages to a mobile terminal of the user, sending emails to the user, etc.

Step 307: Trace the data quality when a data service is abnormal.

When the data service is abnormal, a detailed record, a log record, and the data to be accessed corresponding to the abnormal time are matched according to the time corresponding to the data service abnormality, and the cause of the abnormality is located based on the detailed record, the log record, and the data to be accessed.

It should be noted that the above process from step 301 to step 304 and the above process from step 305 to step 306 are two independent processes, which may be performed sequentially or simultaneously, which is not specifically limited in the present disclosure.

For the problem about the data access quality in the construction of the digital information system, the present disclosure provides a corresponding management mechanism according to subdivided dimensions, achieves multi-dimensional detection of data access scenarios, standardizes the data access process, improves the data access stability, reduces the cost of troubleshooting and localization during operation and maintenance, and enhances the data service quality.

Referring to Fig. 4, Fig. 4 is a schematic diagram of a structure of a data access apparatus provided by an embodiment of the present disclosure. As shown in Fig. 4, the data access apparatus 400 includes a first sending module 401, a loading module 402, a parsing module 403, and an access module 404.

The first sending module 401 is configured to send a data connection request to a data source system, where the data connection request carries connection configuration information, and the connection configuration information is used to represent configuration information required for completing data connection with the data source system.

The loading module 402 is configured to load data to be accessed, as determined by the data source system in response to the data connection request.

The parsing module 403 is configured to parse the successfully-loaded data to be accessed, and detect the parsed data to be accessed based on the connection configuration information.

The access module 404 is configured to access the successfully-detected data to be accessed to a target database.

Further, the connection configuration information includes an IP address corresponding to the data source system, a connection protocol type, a port number of a connection protocol, authentication information, and identification information of the data to be accessed. The identification information of the data to be accessed includes directory information, database table information, or topic information.

The loading module 402 includes: an establishment submodule, configured to establish a link for data interaction with the data source system based on the IP address corresponding to the data source system, the connection protocol type, and the port number of the connection protocol; an identity authentication submodule, configured to perform identity authentication on the data source system using the link and the authentication information; and a loading submodule, configured to determine, in the case of successful identity authentication of the data source system, the data to be accessed from the data source system based on the identification information of the data to be accessed, and load the data to be accessed.

Further, the data access apparatus 400 also includes: a first processing module, configured to record and store, in the case of successful loading of the data to be accessed, detailed access information of the data to be accessed, where the detailed access information includes at least one of a file name list, a file size, and file creation time; and a second processing module, configured to access, in the case of failed loading of the data to be accessed, the data to be accessed to an abnormal data directory, and record and store detailed abnormality information of the data to be accessed, where the detailed abnormality information includes at least one of loading time, the IP address corresponding to the data source system, the connection protocol type, the port number of the connection protocol, the authentication information, and the identification information of the data to be accessed.

Further, the data access apparatus 400 also includes: a second sending module, configured to periodically send, in the process of loading the data to be accessed, a handshake request to the data source system at a preset interval, where the handshake request carries the connection configuration information; a determination module, configured to determine a link state with the data source system and an access condition of the data to be accessed according to a response made by the data source system based on the handshake request, where the response includes whether a response message from the data source system is received, and whether the response message represents successful detection of the connection configuration information in the case of receiving the response message from the data source system; and a record and storage module, configured to record and store the link state and the access condition.

Further, the data access apparatus 400 also includes: a third processing module, configured to record and store a detection log in the case of determining abnormalities in the link state, where the detection log is used to record the cause of the link abnormalities; and an output module, configured to output alarm information, where an output method of the alarm information includes at least one of displaying on a user interactive interface, pushing messages to a mobile terminal of a user, and sending emails to the user.

Further, the parsing module 403 includes: a parsing submodule, configured to parse the successfully-loaded data to be accessed to obtain a field content and a field order of the data to be accessed; a detection submodule, configured to detect whether the field content and the field order meet requirements of data feature information; an execution submodule, configured to perform, in the case of detecting that the field content and the field order meet the requirements of the data feature information, the step of accessing the successfully-detected data to be accessed to the target database; and an access submodule, configured to access, in the case of detecting that the field content and the field order do not meet the requirements of the data feature information, the data to be accessed to the abnormal data directory, and record and store the cause of abnormalities of the data to be accessed, where the cause of the abnormalities of the data to be accessed includes abnormalities in the field content or the field order of the data to be accessed.

Further, there are a plurality of types of data source systems, and different types of data source systems correspond to different connection protocol types.

The data access apparatus 400 may implement the steps of the data access method provided in any one of the above method embodiments during execution, and can achieve the same technical effects, which are not elaborated herein.

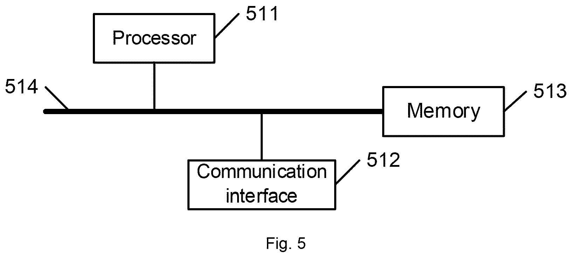

As shown in Fig. 5, an embodiment of the present disclosure provides an electronic device, including a processor 511, a communication interface 512, a memory 513, and a communication bus 514, where the processor 511, the communication interface 512, and the memory 513 are in mutual communication through the communication bus 514.The memory 513 is configured to store a computer program.

In an embodiment of the present disclosure, the processor 511 is configured to implement, when executing the program stored on the memory 513, the data access method provided in any one of the above method embodiments, including: sending a data connection request to a data source system, where the data connection request carries connection configuration information, and the connection configuration information is used to represent configuration information required for completing data connection with the data source system; loading data to be accessed, as determined by the data source system in response to the data connection request; parsing the successfully-loaded data to be accessed, and detecting the parsed data to be accessed based on the connection configuration information; and accessing the successfully-detected data to be accessed to a target database.

An embodiment of the present disclosure further provides a computer-readable storage medium, having a computer program stored therein. The computer program, when executed by a processor, implements the steps of the data access method provided in any one of the above method embodiments.

In this embodiment of the present disclosure, the data connection request is sent to the data source system and carries the connection configuration information, and the connection configuration information is used to represent the configuration information required for completing the data connection with the data source system; the data to be accessed, as determined by the data source system in response to the data connection request is loaded; the successfully-loaded data to be accessed is parsed, and the parsed data to be accessed is detected based on the connection configuration information; and the successfully-detected data to be accessed is accessed to the target database. Through the method, in the process of accessing the data to be accessed to the target database, the data to be accessed may be detected based on the connection configuration information, thereby accessing the successfully-detected data to be accessed, effectively ensuring the quality of the accessed data, and reducing the operation and maintenance costs.

It should be noted that herein, relational terms such as "first" and "second" are used only to distinguish one entity or operation from another and do not necessarily require or imply any actual relationship or order between these entities or operations. In addition, the terms "comprise", "include", or any other variations thereof are intended to cover non-exclusive inclusions, and therefore a process, a method, an article, or a device including a series of elements not only includes those elements but also includes other elements not clearly listed, or further includes elements inherent to the process, the method, the article, or the device. In the absence of further restrictions, an element specified by the phrase "including a..." does not exclude the existence of other identical elements in the process, the method, the article, or the device that includes the element.

The above contents are merely specific implementations of the present disclosure, such that those skilled in the art can understand or implement the present disclosure. More modifications for these embodiments are apparent to those skilled in the art, and general principles defined herein may be implemented in other embodiments without departing from the spirit or scope of the present disclosure. Therefore, the present disclosure will not be limited by these embodiments shown herein but is required to conform to a widest scope consistent with the principles and novel characteristics disclosed herein.

## Claims

1. A data access method, comprising:
sending a data connection request to a data source system, wherein the data connection request carries connection configuration information, and the connection configuration information is used to represent configuration information required for completing data connection with the data source system;
loading data to be accessed, as determined by the data source system in response to the data connection request;
parsing successfully-loaded data to be accessed, and detecting parsed data to be accessed based on the connection configuration information; and
accessing successfully-detected data to be accessed to a target database.

2. The method according to claim 1, wherein the connection configuration information comprises an Internet protocol, IP address corresponding to the data source system, a connection protocol type, a port number of a connection protocol, authentication information, and identification information of the data to be accessed, and the identification information of the data to be accessed comprises directory information, database table information, or topic information; and
the loading data to be accessed, as determined by the data source system in response to the data connection request comprises:
establishing a link for data interaction with the data source system based on the IP address corresponding to the data source system, the connection protocol type, and the port number of the connection protocol;
performing identity authentication on the data source system using the link and the authentication information; and
determining, in a case of successful identity authentication of the data source system, the data to be accessed from the data source system based on the identification information of the data to be accessed, and loading the data to be accessed.

3. The method according to claim 2, further comprising:
recording and storing, in a case of successful loading of the data to be accessed, detailed access information of the data to be accessed, wherein the detailed access information comprises at least one of a file name list, a file size, and file creation time; and
accessing, in a case of failed loading of the data to be accessed, the data to be accessed to an abnormal data directory, and recording and storing detailed abnormality information of the data to be accessed, wherein the detailed abnormality information comprises at least one of loading time, the IP address corresponding to the data source system, the connection protocol type, the port number of the connection protocol, the authentication information, and the identification information of the data to be accessed.

4. The method according to claim 1, further comprising:
periodically sending, in the process of loading the data to be accessed, a handshake request to the data source system at a preset interval, wherein the handshake request carries the connection configuration information;
determining a link state with the data source system and an access condition of the data to be accessed, according to a response status made by the data source system based on the handshake request, wherein the response status comprises whether a response message from the data source system is received, and whether the response message represents successful detection of the connection configuration information in a case of receiving the response message from the data source system; and
recording and storing the link state and the access condition.

5. The method according to claim 4, further comprising:
recording and storing a detection log in a case of determining abnormalities in the link state, wherein the detection log is used to record abnormal cause of the link; and
outputting alarm information, wherein an output method of the alarm information comprises at least one of displaying on a user interactive interface, pushing messages to a mobile terminal of a user, and sending emails to the user.

6. The method according to claim 2, wherein the connection configuration information further comprises data feature information, and the data feature information is used to specify a field content and a field order of the data to be accessed; and
the parsing the successfully-loaded data to be accessed, and detecting the parsed data to be accessed based on the connection configuration information comprises:
parsing the successfully-loaded data to be accessed to obtain the field content and the field order of the data to be accessed;
detecting whether the field content and the field order meet requirements of the data feature information;
performing, in a case of detecting that the field content and the field order meet the requirements of the data feature information, the step of accessing the successfully-detected data to be accessed to a target database; and
accessing, in a case of detecting that the field content and the field order do not meet the requirements of the data feature information, the data to be accessed to an abnormal data directory, and recording and storing abnormal cause of the data to be accessed, wherein the abnormal cause of the data to be accessed comprises abnormalities in the field content or the field order of the data to be accessed.

7. The method according to claim 1, wherein data source systems has multiple types, and different types of the data source systems correspond to different connection protocol types.

8. A data access apparatus, comprising:
a first sending module, configured to send a data connection request to a data source system, wherein the data connection request carries connection configuration information, and the connection configuration information is used to represent configuration information required for completing data connection with the data source system;
a loading module, configured to load data to be accessed, as determined by the data source system in response to the data connection request;
a parsing module, configured to parse successfully-loaded data to be accessed, and detect parsed data to be accessed based on the connection configuration information; and
an access module, configured to access successfully-detected data to be accessed to a target database.

9. An electronic device, comprising a processor, a communication interface, a memory, and a communication bus, wherein the processor, the communication interface, and the memory are in mutual communication through the communication bus;
the memory is configured to store a computer program; and
the processor is configured to implement the data access method according to any one of claims 1 to 7 when executing the program stored on the memory.

10. A computer-readable storage medium, having a computer program stored therein, wherein the computer program, when executed by a processor, implements the data access method according to any one of claims 1 to 7.
